# EUROPEAN PATENT SPECIFICATION

(11) **EP 1 788 775 B1**
(45) Date of publication and mention of the grant of the patent: **28.11.2007**
(21) Application number: 05300940.3
(22) Date of filing: 18.11.2005
(51) Int. Cl.: H04L 29/06, H04L 12/28, H04L 12/56, H04Q 7/38

(54) **Method for providing services from a server to a terminal over a mobile/wireless communication network, corresponding node and terminal**
Verfahren zur Bereitstellung von Diensten von einem Server zu einem Client über ein mobiles drahtloses Kommunikationsnetz, entsprechender Knoten und Endgerät
Procédé en vue de la délivrance de services d'un serveur à un client au travers d'un réseau mobile sans fil, noeud et terminal correspondant

(43) Date of publication of application: 23.05.2007
(73) Proprietor: Alcatel Lucent, 75008 Paris (FR)
(72) Inventor: Faye, Jean-Claude, 91170, Gif Sur Yvette (FR)
(74) Representative: Wetzel, Emmanuelle

(56) References cited:
- EP-A- 1 331 791
- US-A1- 2003 092 421
- US-A1- 2003 154 300
- US-A1- 2004 010 593
- US-A1- 2005 053 034

## Description

**Background of the Invention**

The present invention relates to a method for providing services from a server to a terminal over a mobile/wireless communication network using cache technology.

Network using cache technology may be used in discontinuous coverage networks with zones of non coverage. The service continuity in such networks is guaranteed under the condition that the terminal has a large cache filled in in advance with enough data in such a way that these data can be played seamlessly during the time when the terminal is not under coverage.

A consequence of this is that networks using cache technology may introduce long delays in the transmission. Standard protocols (transport and higher layers protocols) between terminal and server may not support these delays and this may have dramatic consequences as for example modifying the application behaviour (e.g. stopping on going communications), or making the network interface seen by the application as not available.

A solution for solving this problem consists in introducing a network proxy in the access node of the network using cache technology and terminating the communication protocols at the access node to simulate standard delivery to the network side.

This solution nevertheless presents the drawback that no more end to end IP connectivity can be provided since the IP transport and higher layers are terminated at the access node and no more in the terminal.

An additional drawback is that the complexity of the access node is considerably increased by this processing.

EP 1331 791 and US 2003/0154300 disclose different methods in which caching technologies are used in connection with a radio communication network. In EP 1331 791, the handling of cached information at different proxies is disclosed in the context of handoff causing a mobile terminal to be attached to successively to different proxies, the information destined to this terminal being cached in different proxies. In US 2003/0154300, a method for transmitting MMS over a radio communication network is disclosed a message containing to address of the MMS to retrieve is sent to the terminal to which this message is destined.

US 2005/0053034 a seamless vertical handoff allowing a mobile node to continue a connection without disruption as it moves within a wireless overlay network that comprises multiple possibly overlapping layers of wireless networks with different technologies.

None of these documents addresses the end to end IP connectivity.

A particular object of the present invention is to provide a method for guarantying end to end IP connectivity also in networks using cache technology working with high transmission delays.

Another object of the invention is to provide a corresponding access node of such a network with cache technology and terminal.

**Summary of the Invention**

These objects, and others that appear below, are achieved by a method for transmitting user data in a multi-carrier radio communication system according to claim 1, and a terminal according to claim 6.

According to the present invention, the payload is extracted from the message at the access node, stored in a memory and replaced by a label pointing on the memory location. The modified message is forwarded to the terminal using a legacy low speed connection. Independently of this the terminal downloads the payload using a high data rate connection when necessary.

The method according to the present invention presents the advantage to ensure end to end IP connectivity since the complete message header necessary for the connectivity is transmitted without delay to the terminal over a legacy low speed connection (e.g. GSM/GPRS or UMTS). The payload on the contrary can be freely downloaded from the memory location when the terminal cache status requires it and/or when a high speed connection is possible when the terminal is under the coverage of the non continuous coverage network. As a consequence the network side is not impacted by the cache mechanisms used on the other side of the air interface.

Another advantage of the present invention is that the access node of the network using cache technology is simplified since it does no more require any proxy functionality for terminating communication protocols.

Further advantageous features of the invention are defined in the dependent claims.

**Brief Description of the Drawings**

Other characteristics and advantages of the invention will appear on reading the following description of a preferred embodiment given by way of non-limiting illustrations, and from the accompanying drawings, in which:
- Figure 1 shows the communication between an access node and a terminal using the method of the present invention;
- Figure 2 shows a sequence of messages exchanged between an access node and a terminal for performing the method according to the present invention;
- Figure 3 shows a first method for retrieving cache information by the terminal in case of handover if the method according to the present invention is used;
- Figure 4 shows a second method for retrieving cache information by the terminal in case of handover if the method according to the present invention is used.

**Detailed Description of the Invention**

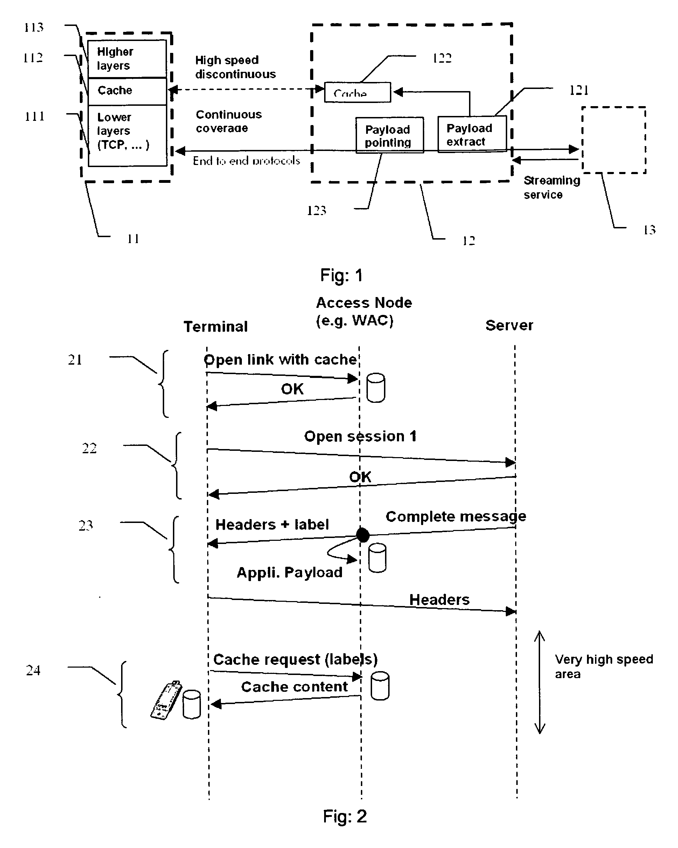

Figure 1 shows the communication between an access node and a terminal using the method of the present invention. Terminal 11 comprises low layers 111, a cache layer 112 and higher layers 113 with an application layer. Access node 12 (e.g. a Wireless Access Controller WAC as defined by the WIMAX FORUM) comprises a payload extracting module 121, a cache 122, a payload pointing module 123. Server 13 is adapted to provide terminal 11 for example with streaming services supported by end to end protocols.

Both terminal 11 and access point 12 are supporting connections using a legacy radio communication network as GSM/GRPS/EDGE or UMTS with rather low bit rate connections. These connections enables terminal 11 to have a continuous radio coverage at low bit rate. On the other hand, both terminal 11 and access node 12 are adapted to establish high speed high data rate connections when terminal 11 is moving to specific island of coverage where such high speed connections are possible. Such island of coverage are usually not contiguous so that only discontinuous coverage is available for such high speed high data rate connections. Preferably, the use of such discontinuous coverage network with very high data rate is advantageous for applications like but not exclusively video streaming.

According to the present invention, and in order to guaranty end to end IP connectivity also in the framework of discontinuous coverage access networks, access node 12 extracts the payload from the received packets at payload extract module 121 and stores the payload in cache 122. Additionally, access node modifies the received packet in including in the packet an indication on the payload location so that terminal 11 can on purpose retrieve the payload stored at access node 12. Preferably the modified packet are forwarded to terminal 11 over the legacy radio communication network with low bit rate. This guaranties that the transmission delays which are controlled by the TCP/IP UDP/IP protocol suite are respected. The payload on this side remains at access node cache 122 until terminal 11 is able to establish a high speed data rate connection and can download with high bit rate the payload using the indication on the payload received in the modified packet.

Figure 2 shows the sequence of messages exchanged between access node 12 and a terminal 11 for performing the method according to the present invention.

In a first step 21, terminal 11 opens a link with the access point cache in order to signal that it will use a service requiring cache functionality. The access node confirms then the availability of cache to terminal 11. This step is nevertheless not mandatory and other mechanisms can be envisaged for checking that cache is available at the access node.

In a second step 22, terminal 11 opens a session to a server 13. This session may request a streaming service or any other service requiring preferably a large bandwidth.

In a third step 23, upon downloading data from the server, the data belonging to the requested service, the access node extracts the data from the frames they are contained in and store them at the cache the terminal has established a link with. Then, the Access node further modifies the frame in adding a label consisting preferably in a pointer which points to the location of the cache the payload data extracted from the frame have been stored. Then the modified frame is sent from the access node to the terminal.

These first three steps 21,...,23 can preferably be performed over an IP network for the portion between the server and the access node and over a legacy radio network (e.g. GSM-based or UMTS-based network for the portion between the access node and the terminal. Nevertheless, the type of networks are not restrictive the method according to the invention can also be implemented if other types of networks are available between the server and the access point and between the access point and the terminal.

Further steps 24 concern the retrieval of the payload data at the terminal and is preferably performed when the terminal enters a hot spot or a hot zone providing a large bandwidth and high downlink data rates (e.g: a WIMAX hot zone or any other hot spot of a 4^{th} generation network).

In order to retrieve the payload the terminal send a cache request to the Access node using the labels it has stored from received modified frames. The access point use the labels as pointer to the cache allocated to the terminal and extract the stored payload data from the locations indicated by the labels. Then the payload data are encapsulated in frames and transferred to the terminal with high speed rate over the WIMAX or 4^{th} generation network.

According to the present invention it is also provided for appropriate methods for retrieving the cached data in case of handover performed at the terminal. Two preferred embodiments will be described in the following.

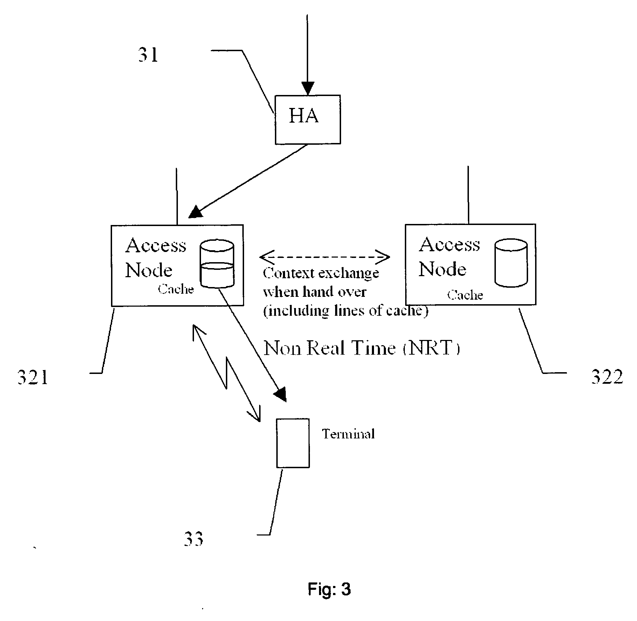

Figure 3 shows a first method for retrieving cache information by the terminal in case of handover if the method according to the present invention is used. Figure 3 shows a core part of a network comprising an home agent 31 according to Mobile IP terminology and an access part of the network comprising two access nodes 321, 322 and a terminal 33 which has left the coverage of access node 322 to enter the coverage of access node 321. Both access nodes comprise a cache having the functionality of storing payload data extracted from the received frames according to the method of the present invention. Upon hand over detection at home agent 31, sends home agent 31 a trigger to access node 322 to send the content of its cache related to terminal 33 to access node 321. Then, all payload data destined to the terminal are located in the access node the mobile terminal has been handed over to (serving access node). When good radio conditions are met, the terminal 33 requires the payload data from the serving access node 321 to which it is attached. More precisely terminal 33 comprises means for receiving a modified message from access node 321, the message not comprising a payload. Terminal 33 further comprises means for detecting in the message a label identifying the location of the missing payload in a cache memory of access node 321, as well as means for downloading the payload from the identified location of the cache memory upon detection of appropriate radio conditions.

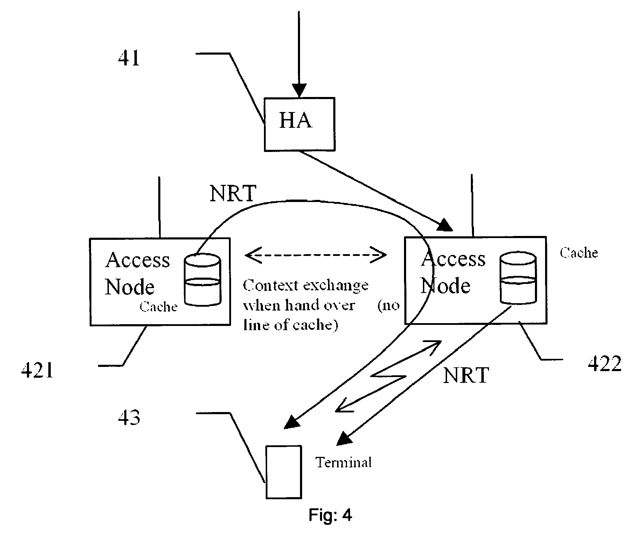

Figure 4 shows a second method for retrieving cache information by the terminal in case of handover if the method according to the present invention is used. Figure 4 shows a network part comprising a home agent 41 according to the mobile IP protocol terminology, two access nodes 421, 422 and a terminal 43 which has left the coverage of access node 421 to enter the coverage of access node 422. Both access nodes 421, 422 comprise a cache having the functionality of storing payload data extracted from the received frames according to the method of the present invention. Payload data are created and stored in the Access Node cache memory, and stay in this location all the time during the terminal movement. After many "hand over", payload data may be distributed in many Access Nodes 421, 422 for the same terminal 43.

When good radio conditions are met, the terminal 43 retrieves the required line of cache in the right location access node 421 cache or access node 422 cache, with the help of the "Access Node address" which was received from the serving access node 422 in the label of the "end to end" corresponding message. This information is part of the context transferred from access node 421 to access node 422 when handover is performed. In this embodiment of the present invention only the context is transferred from access node 421 to access node 422 at handover but not the lines of caches which remain in the cache of access node 421.

More precisely, terminal 43 comprises means for receiving a modified message from access node 422, the message not comprising a payload. Terminal 43 further comprises means for detecting in the message a label identifying the locations of the missing payload in a cache memory of access node 421 and of access node 422, as well as means for downloading the payload from the identified locations of the cache memory upon detection of appropriate radio conditions.

The advantage of this embodiment consists in avoiding the transfer of payload data between different access nodes upon hand over of the terminal. This reduce the handover duration.

## Claims

1. Method for providing services from a server (13) to a terminal (11) over a mobile/wireless communication network (12), an end to end protocol being used between said server (13) and said terminal (11), said method comprising the steps of:
- sending messages from said server (13) to an access node (12) of said mobile /wireless communication network;
- extracting (121) at said access node (12) the payload from said message and storing it in a cache memory (122),
- including (123) in the message a label identifying the location of said payload in said cache memory (122), **characterised in that** it further comprises the steps of:
- forwarding said modified message to the terminal (11) over a low speed legacy mobile communication network; and
- downloading from the terminal (11) said payload from said cache memory (122) when the terminal cache status requires it and/or when a high speed connection is possibly when the terminal is under the coverage of the non continuous coverage network using a high speed high data rate communication between said access node (12) and said terminal (11).

2. Method according to claim 1, wherein upon handover of said terminal (43) between several access points (421, 422) said payload is retrieved from cache memory at said several access points (421, 422).

3. Method according to claim 1, wherein upon handover of said terminal (33) between several access points (321, 322), said payload is transferred from said several access points (321, 322) to the serving access point (321) at the time when said payload is requested from said terminal (33).

4. Method according to claim 1, wherein said services are streaming services.

5. Terminal (11) adopted to be provided services from a server (13) over a mobile/wireless communication network (12) comprising:
- means for receiving a modified message from an access node (12) of said mobile/wireless communication network over a low speed legacy mobile communication network, said message not comprising the payload;
- means for detecting in the message a label identifying the location of said payload in a cache memory of said access node, **characterised in that** it further comprises:
- means for downloading said payload from said cache memory upon when the terminal cache status requires it and/or when a high speed connection is possible when the terminal is under the coverage of the non continuous coverage network network using a high speed high data rate communication between said access node (12) and said terminal (11).

## Patentansprüche

1. Verfahren zur Bereitstellung von Diensten von einem Server (13) zu einem Endgerät (11) über ein mobiles/drahtloses Kommunikationsnetzwerk (12) und ein Ende-zu-Ende-Protokoll, das zwischen diesem Server (13) und diesem Endgerät (11) verwendet wird, wobei dieses Verfahren die folgenden Schritte umfasst:
- Senden von Nachrichten von diesem Server (13) an einen Zugangsknoten (12) dieses mobilen/drahtlosen Kommunikationsnetzwerks;
- Extrahieren (121) der Nutzlast aus dieser Nachricht an diesem Zugangsknoten (12) und Speichern dieser Nutzlast in einem Cache-Speicher (122);
- Einbeziehen (123) eines Kennzeichens in die Nachricht, das die Position dieser Nutzlast in diesem Cache-Speicher (122) angibt, **dadurch gekennzeichnet, dass** dieses Verfahren des weiteren die folgenden Schritte umfasst: Weiterleiten dieser geänderten Nachricht an das Endgerät (11) über ein eigenes Mobilkommunikationsnetzwerk mit niedriger Geschwindigkeit; und
- Herunterladen dieser Nutzlast aus diesem Cache-Speicher (122) durch das Endgerät (11), wenn der Cache-Status des Endgeräts dies erfordert und/oder wenn eine Hochgeschwindigkeitsverbindung möglich ist, während sich das Endgerät im Versorgungsbereich des diskontinuierlichen Netzwerks befindet, über eine Hochgeschwindigkeitsverbindung mit hoher Datenrate zwischen diesem Zugangsknoten (12) und diesem Endgerät (11).

2. Verfahren gemäß Anspruch 1, wobei nach dem Netzwerkwechsel dieses Endgeräts (43) zwischen verschiedenen Zugangspunkten (421, 422) diese Nutzlast aus dem Cache-Speicher an diesen verschiedenen Zugangspunkten (421, 422) abgerufen wird.

3. Verfahren gemäß Anspruch 1, wobei nach dem Netzwerkwechsel dieses Endgeräts (33) zwischen verschiedenen Zugangspunkten (321, 322) diese Nutzlast von diesen verschiedenen Zugangspunkten (321, 322) an den Versorgungs-Zugangspunkt (321) gesendet wird zu einem Zeitpunkt, zu dem diese Nutzlast von diesem Endgerät (33) angefordert wird.

4. Verfahren gemäß Anspruch 1, wobei es sich bei diesen Diensten um Streaming-Dienste handelt.

5. Endgerät (11), das so angepasst ist, dass ihm über ein mobiles drahtloses Kommunikationsnetzwerk (12) Dienste von einem Server (13) bereitgestellt werden können, wobei dieses Endgerät Folgendes umfasst:
- Mittel zum Empfangen einer geänderten Nachricht von einem Zugangsknoten (12) dieses mobilen drahtlosen Kommunikationsnetzwerks über ein eigenes langsames Mobilkommunikationsnetzwerk, wobei diese Nachricht die Nutzlast nicht umfasst;
- Mittel zum Erkennen eines Kennzeichens in der Nachricht, das die Position dieser Nutzlast in einem Cache-Speicher dieses zugangsknotens angibt, **dadurch gekennzeichnet, dass** sie Folgendes umfassen:
- Mittel zum Herunterladen der Nutzlast aus diesem Cache-Speicher, wenn der Cache-Status des Endgeräts dies erfordert und/oder wenn eine Hochgeschwindigkeitsverbindung möglich ist, während sich das Endgerät im Versorgungsbereich des diskontinuierlichen Netzwerks befindet, über eine Hochgeschwindigkeitsverbindung mit hoher Datenrate zwischen diesem Zugangsknoten (12) und diesem Endgerät (11).

## Revendications

1. Procédé permettant de fournir des services d'un serveur (13) à un terminal (11) sur un réseau de communication mobile/sans fil (12), un protocole de bout en bout étant utilisé entre ledit serveur (13) et ledit terminal (11), ledit procédé comprenant les étapes suivantes :
envoi de messages dudit serveur (13) à un noeud d'accès (12) dudit réseau de communication mobile/sans fil ;
extraction (121) au niveau dudit noeud d'accès (12) des données utiles dudit message et stockage dans une mémoire cache (122),
inclusion (123) dans le message d'une étiquette identifiant l'emplacement desdites données utiles dans ladite mémoire cache (122), **caractérisé en ce qu'**il comprend en outre les étapes suivantes :
transfert dudit message modifié au terminal (11) sur un réseau de communication mobile patrimonial basse vitesse ; et
téléchargement depuis le terminal (11) desdites données utiles depuis ladite mémoire cache (122) lorsque l'état de la mémoire cache l'exige et/ou lorsqu'une connexion haute vitesse est possible lorsque le terminal est couvert par le réseau à couverture non continue en utilisant une communication haut débit entre ledit noeud d'accès (12) et ledit terminal (11).

2. Procédé selon la revendication 1, dans lequel suite au transfert dudit terminal (43) entre plusieurs points d'accès (421, 422), lesdites données utiles sont récupérées de la mémoire cache au niveau desdits plusieurs points d'accès (421, 422).

3. Procédé selon la revendication 1, dans lequel suite au transfert dudit terminal (33) entre plusieurs points d'accès (321, 322), lesdites données utiles sont transférées desdits plusieurs points d'accès (321, 322) au point d'accès de service (321) au moment où lesdites données utiles sont demandées par ledit terminal (33).

4. Procédé selon la revendication 1, dans lequel lesdits services sont des services en continu.

5. Terminal (11) adapté pour se voir fournir des services depuis un serveur (13) sur un réseau de communication mobile/sans fil (12), comprenant :
des moyens permettant de recevoir un message modifié depuis un noeud d'accès (12) dudit réseau de communication mobile/sans fil sur un réseau de communication mobile patrimonial à faible vitesse, ledit message ne comprenant pas les données utiles ;
des moyens permettant de détecter dans le message une étiquette identifiant l'emplacement desdites données utiles dans une mémoire cache dudit noeud d'accès, **caractérisé en ce qu'**il comprend en outre :
des moyens permettant de télécharger lesdites données utiles depuis ladite mémoire cache lorsque l'état du terminal l'exige et/ou lorsqu'une connexion haute vitesse est possible lorsque le terminal est couvert par le réseau à couverture non continue en utilisant une communication haut débit entre ledit noeud d'accès (12) et ledit terminal (11).
